# EUROPEAN PATENT SPECIFICATION

(11) **EP 0 632 044 B1**
(45) Date of publication and mention of the grant of the patent: **27.01.1999**
(21) Application number: 94109735.4
(22) Date of filing: 23.06.1994
(51) Int. Cl.: C07F 7/12, C07F 7/08, C09K 19/40

(54) **A silacyclohexane compound, a method of preparing it and a liquid crystal composition containing it**
Eine Silacyclohexanverbindung, deren Herstellung und diese enthaltende Flüssigkristallzusammensetzungen
Composé silacyclohexane, procédé de préparation et composition crystalline liquide le contenant

(30) Priority: 28.06.1993 JP 181877/93
(43) Date of publication of application: 04.01.1995
(73) Proprietor: SHIN-ETSU CHEMICAL CO., LTD., Chiyoda-ku Tokyo (JP)
(72) Inventor: Shimizu, Takaaki, c/o Specialty Chemicals, Naka Kubiki-gun, Niigata-ken (JP); Ogihara, Tsutomu, c/o Specialty Chemicals, Naka Kubiki-gun, Niigata-ken (JP); Kinsho, Takeshi, c/o Specialty Chemicals, Naka Kubiki-gun, Niigata-ken (JP); Kaneko, Tatsushi, c/o Specialty Chemicals, Naka Kubiki-gun, Niigata-ken (JP); Saito, Ryuichi, c/o Specialty Chemicals, Naka Kubiki-gun, Niigata-ken (JP); Kurihara, Hideshi, c/o Specialty Chemicals, Naka Kubiki-gun, Niigata-ken (JP)
(74) Representative: ter Meer, Nicolaus, Dipl.-Chem., Dr.

(56) References cited:
- EP-A- 0 355 008
- JOURNAL OF THE AMERICAN SOCIETY, vol.94, no.14, 1972 pages 5080 - 5082 SAKURAI, H. ET AL. 'NEW CONFORMATIONALLY STABLE 4-TERT-BUTYL-1-SILACYCLOHEXANES AND STEREOCHEMISTRY OF INSERTION OF DIMETHYLSILYLENES INTO THE SILICON-HYDROGEN BOND'
- LIEBIGS ANNALEN DER CHEMIE, 1979 pages 1915 - 1924 ACKERMANN, J. ET AL. 'DERIVATE DES 1-(4-CHLORPHENYL)SILACYCLOHEXANS MIT 3-(DIETHYLAMINO)PROPYL- UND 2-(DIETHYLAMINO)ETHYL-GRUPPIERUNGEN'

## Description

### BACKGROUND OF THE INVENTION

### 1. Field of the invention

This invention relates to a new silacyclohexane compound, a method of preparing it, and a liquid crystal composition which contains it as well as a liquid crystal display element which contains said liquid crystal composition.

### 2. The Prior Art

A liquid crystal display element utilizes the optical anisotropy and dielectric anisotropy of liquid crystal substances. Display methods include the TN mode (twisted nematic mode), the STN mode (super twisted nematic mode), the SBE mode (super birefringence mode), the DS mode (dynamic scattering mode), the guest-host mode, the DAP mode ("deformation of aligned phase" mode) and the OMI mode (optical mode interference mode). The most common display device has a twisted nematic structure based on the Schadt-Helfrich mode.

Properties required of the liquid crystal substance used in these liquid crystal displays are somewhat different depending on the display mode. However, a wide liquid crystal temperature range and stability against moisture, air, light, heat, electric fields, etc. are commonly required in all display methods. Furthermore, it is desirable for the liquid crystal material to have a low viscosity, and also to have a short address time, low threshold voltage and high contrast in the cell(s).

Currently, there is no single compound which satisfies all these requirements. In practice, liquid crystal mixtures are obtained by mixing several to more than ten liquid crystal compounds and liquid crystal like compounds. Because of this, it is also important that components of a liquid crystal composition mix easily each other.

Liquid crystal compounds which can be used as these components can be classified into the following categories:
1) Compounds which contribute to a reduction in viscosity and a lowering of the melting point of the mixed liquid crystal composition
2) Compounds which mainly control the electro-optical functions of the mixed liquid crystal composition
3) Compounds which contribute to raising the clearing point of the mixed liquid crystal composition
4) Compounds which contribute to refractive anisotropy of the mixed liquid crystal composition
5) Compounds which control the colored display and orientation of the mixed liquid crystal composition

For compounds which belong to category 1) in this classification, compounds with so-called PCH structure such as 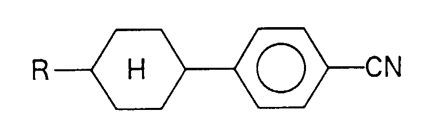 (Japanese examined patent publication (Tokko) Sho 56-38146), 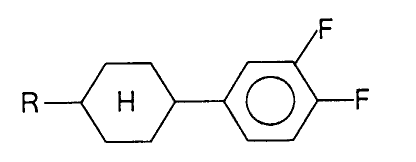 (Tokko Sho 64-373), and 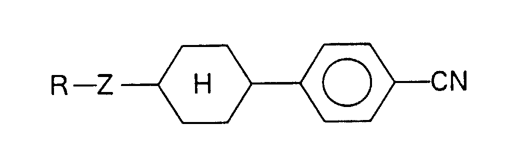 (Tokko Hei 1-38772)
have been known.

In recent years, along with the expansion of the applications of liquid crystal displays, the characteristics required of liquid crystal materials are becoming more and more advanced and demanding. In particular, superior characteristics such as improved low temperature performance, a wider temperature range for automobile onboard use and a lower driving voltage, compared with conventional liquid crystal substances, are desired.

Journal of the American Chemical Society, Vol. 94, No. 14, 1972, pages 5080-5082 relates to stereochemical studies on 4-tert-butyl-1-silacyclohexane derivatives and specifically mentions the compound trans-4-(1-methyl-4-tert-butyl-1-silacyclohexyl)-chlorobenzene.

Liebigs Ann. Chem. 1979, 1915-1924 relates to derivatives of 1-(4-chlorophenyl)silacyclohexane with 3-(diethylamino)propyl and 2-(diethylamino)ethyl groups.

EP-A-0 355 008 relates to organosilylalkyl or alkenyl compounds, a method for preparing same and their use in liquid crystalline mixtures.

### BRIEF SUMMARY OF THE INVENTION

From such a viewpoint, this invention is a newly developed liquid crystal substance targeting improvement in the characteristics of compounds which contribute to a reduction in viscosity and a lowering of the melting point of the mixed liquid crystal composition, and its object is to provide a liquid crystal compound containing silacyclohexane rings, which is completely different from the conventional liquid crystal compounds with the PCH structure.

This invention provides a silacyclohexane compound represented by the following general formula (I).

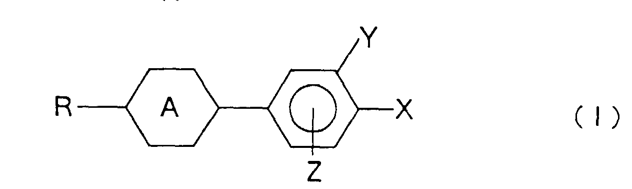

In this formula, R denotes a linear-chain alkyl group with a carbon number of 1-10, a branched-chain alkyl group with a carbon number of 3-8, an alkoxyalkyl group with a carbon number of 2-7, or an alkenyl group with a carbon number of 2-8, 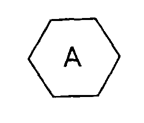 is a trans-1-silacyclohexylene or trans-4-silacyclohexylene group whose silicon at position 1 or position 4 has a substitutional group of H, F, Cl or CH₃, X denotes a CN, F, Cl, CF₃, CF₂ Cl, CHFCl, OCF₃, OCHF₂, OCF₂Cl, OCHFCl, R or OR group, Y denotes H or F, Z denotes H or F, except trans-4-(1-methyl-4-tert-butyl-1-silacyclohexyl)-chlorobenzene.

This invention also provides a method of preparing the silacyclohexane compound represented by said general formula (I) characterized by the use of a reaction between an organometallic reagent R-M (M denotes MgP, ZnP or Li, P denotes a halogen group and R has the meaning as defined above) and a silacyclohexane compound 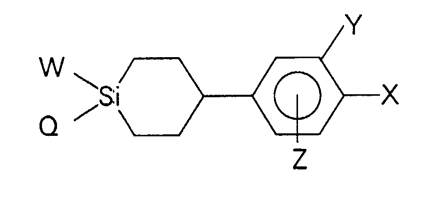 (wherein W denotes a H, F, Cl or CH₃ group, Q denotes a halogen or alkoxy group, and X, Y and Z are as defined above).

This invention also provides a method of preparing the silacyclohexane compound represented by said general formula (I) characterized by the use of a reaction between an organometallic reagent 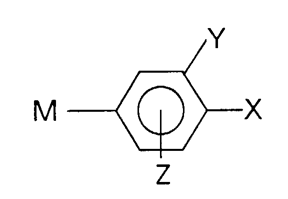 (wherein M,X,Y and Z are as defined above)
and a silacyclohexane compound 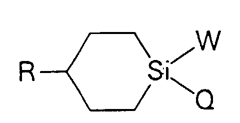 (wherein R, W and Q are as defined above).

Furthermore, this invention provides a method of preparing the silacyclohexane compound represented by the general formula (I) characterized by the use of a reaction between a cyanation reagent and Grignard reagent made from a phenylsilacyclohexane compound 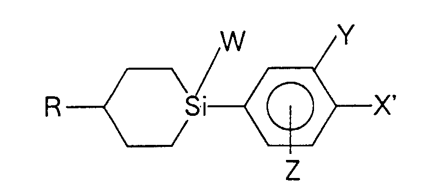 (where X' denotes halogen, R, Y, Z and W are as defined above) which is obtained by a reaction between an organometallic reagent 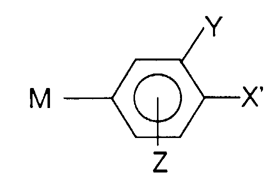 (where M denotes MgP', ZnP' or Li, P' denotes Br or I) and a silacyclohexane compound

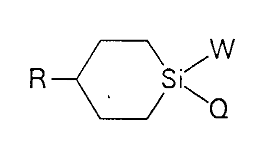

Furthermore, this invention provides a liquid crystal composition characterized by containing the compound represented by the general formula (I) described above and a liquid crystal display element which uses this composition.

### DETAILED DESCRIPTION

The new compounds represented by the general formula (I) are new silacyclohexane compounds whose ring structure has a trans-1 or 4-silacyclohexane ring, specifically represented by ring structures shown below:

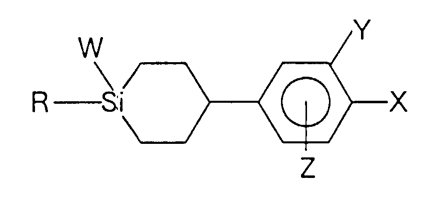

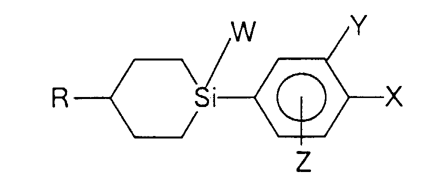

In these formulas, R denotes a linear-chain alkyl group with a carbon number of 1-10, i.e. a methyl, ethyl, n-propyl, n-butyl, n-pentyl, n-hexyl, n-heptyl, n-octyl, n-nonyl or n -decyl group, or a branched-chain alkyl group with a carbon number of 3-8, i.e. isopropyl, sec-butyl, iso-butyl, 1-methylbutyl, 2-methylbutyl, 3-methylbutyl, 1-methylpentyl, 2-methylpentyl, 3-methylpentyl, 1-ethylpentyl, 1-methylhexyl, 2-methylhexyl, 3-methylhexyl, 2-ethylhexyl, 3-ethylhexyl, 1-methylheptyl, 2-methylheptyl or 3-methylheptyl group, or an alkoxyalkyl group with a carbon number of 2-7, i.e. a methoxymethyl, ethoxymethyl, propoxymethyl, butoxymethyl, pentoxymethyl, hexyloxymethyl, methoxyethyl, ethoxyethyl, propoxyethyl, butoxyethyl, pentoxyethyl, methoxypropyl, ethoxypropyl, propoxypropyl, butoxypropyl, methoxybutyl, ethoxybutyl, propoxybutyl, methoxypentyl or ethoxypentyl group, or an alkenyl group with a carbon number of 2-8, i.e. a vinyl, 1-propenyl, allyl, 1-butenyl, 3-butenyl, isoprenyl, 1-pentenyl, 3-pentenyl, 4-pentenyl, dimethylallyl, 1-hexenyl, 3-hexenyl, 5-hexenyl, 1-heptenyl, 3-heptenyl, 6-heptenyl or 7-octenyl group.

W denotes H, F, Cl or CH₃. X denotes a CN, F, Cl, CF₃, CF₂Cl, CHFCl, OCF₃, OCHF₂, OCF₂Cl, OCHFCl, R or OR group. Y denotes H or F. Z denotes H or F.

The partial structure 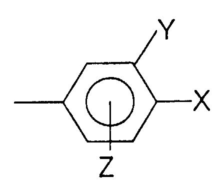 specifically denotes either of the following groups:

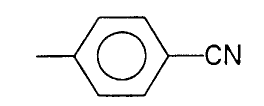

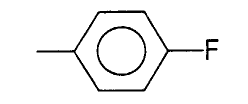

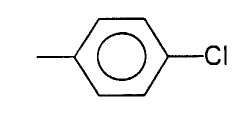

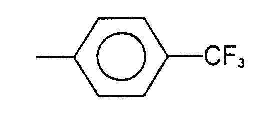

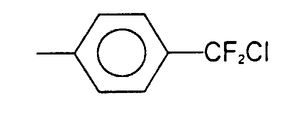

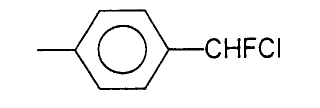

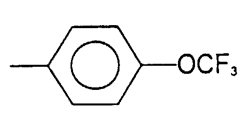

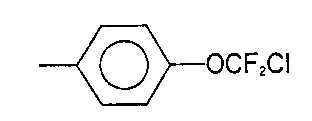

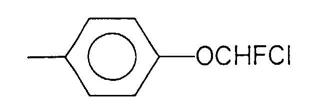

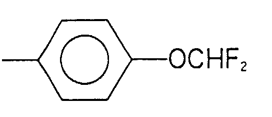

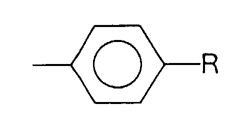

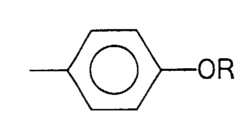

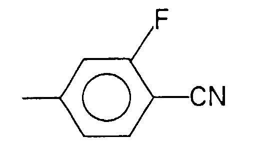

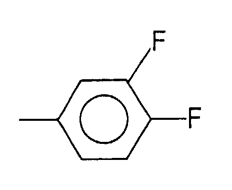

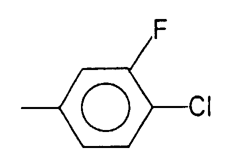

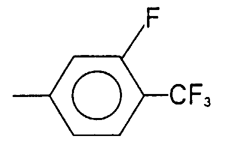

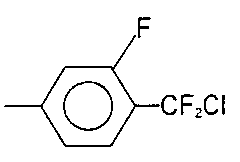

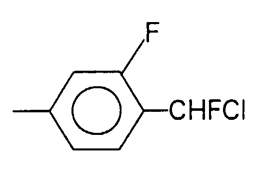

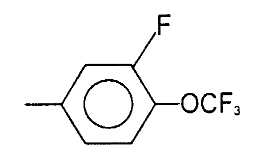

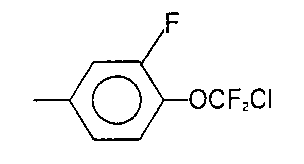

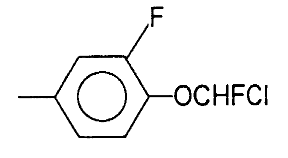

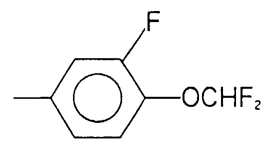

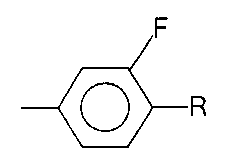

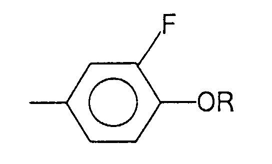

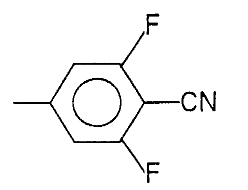

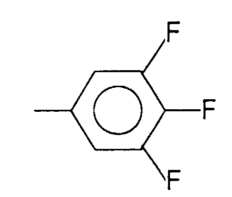

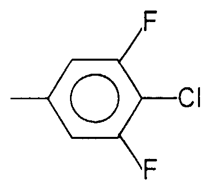

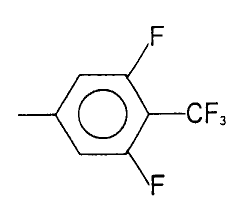

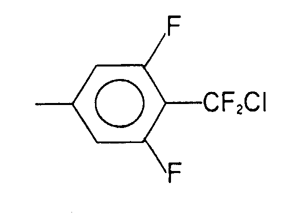

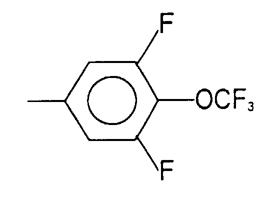

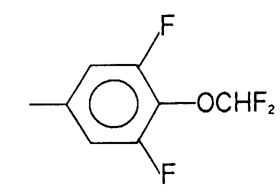

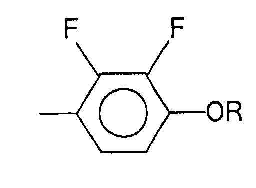

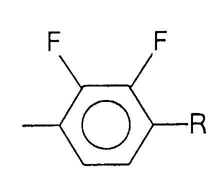

For R, the following groups are desirable for practical use: a linear-chain alkyl group with a carbon number of 3-7, i.e. a n-propyl, n-butyl, n-pentyl, n-hexyl or n-heptyl group, or some branched-chain alkyl groups with a carbon number of 3-7 including isopropyl, 1-methylpropyl, 2-methylpropyl, 1-methylbutyl, 2-methylbutyl, 3-methylbutyl, 1-methylpentyl, 2-methylpentyl and 2-ethylhexyl groups, or an alkoxyalkyl group with a carbon number of 2-6, i.e. a methoxymethyl, methoxyethyl, methoxypropyl, methoxypentyl, ethoxymethyl, ethoxyethyl, propoxymethyl or pentoxymethyl group, or some alkenyl groups including vinyl, 1-propenyl, 3-butenyl, 1-pentenyl, 3-pentenyl, 4-pentenyl,1 -hexenyl, 5-hexenyl, 6-heptenyl and 7-octenyl groups .

H, F and CH₃ groups are desirable for W in practical use.

However, if the ring structure of the silacyclohexane ring is 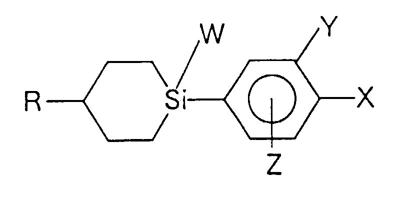 and also X is a CN compound, then the choice of W is limited to an H or a CH₃ group.

In practical use for the partial structure 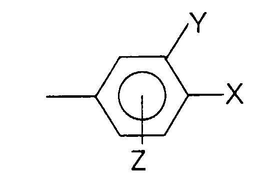 the compounds shown below are desirable.

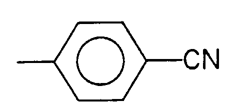

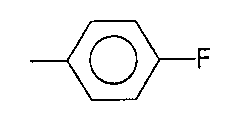

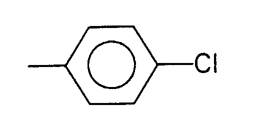

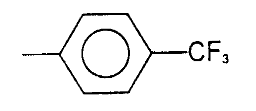

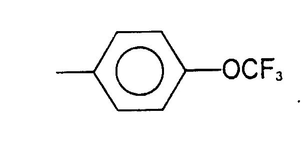

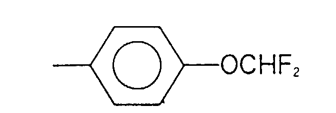

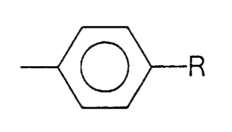

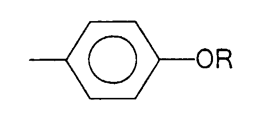

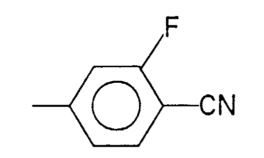

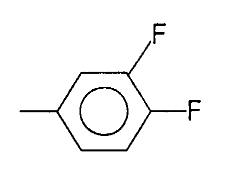

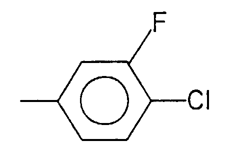

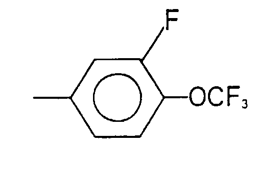

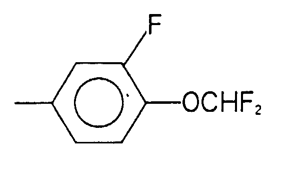

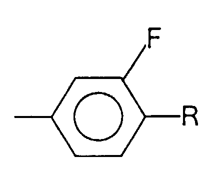

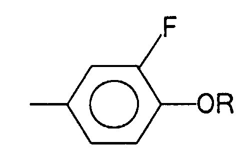

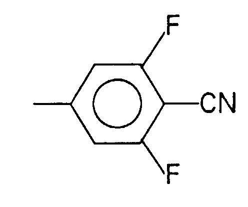

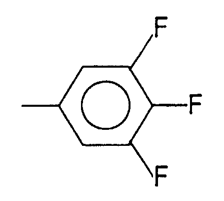

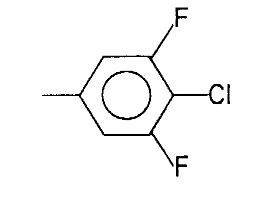

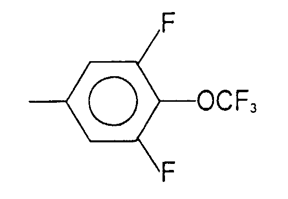

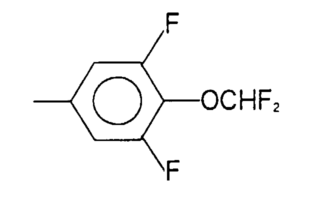

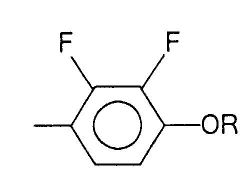

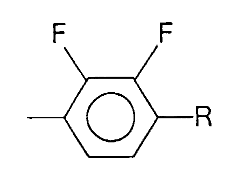

Methods of preparing these compounds are described below.
(1) A method of preparing the compound of this invention when the ring structure of the silacyclohexane ring is 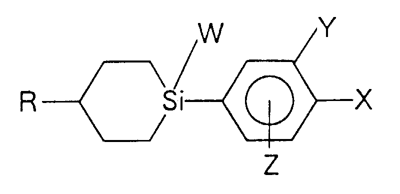 and X is CN
   In this preparation method, p-halobromobenzene or p-haloiodobenzene with substitutional groups Y and Z is brought into reaction with magnesium metal in a solvent such as THF (tetrahydrofuran) to obtain the corresponding Grignard reagent. The reagent thus produced is then brought into reaction with a silacyclohexane compound whose silicon has the substitutional groups W and Q. The product is again brought into reaction with magnesium metal in a solvent such as THF (tetrahydrofuran) to prepare Grignard reagent, which is then brought into reaction with a cyanation reagent such as cyanogen. The compound produced here is a mixture of trans and cis isomers in terms of the conformation of the silacyclohexane ring. A conventional purification means such as chromatography and recrystallization is employed to separate and purify the trans isomer to obtain the silacyclohexane compound of this invention represented by the general formula (I). The reaction formula is shown below. 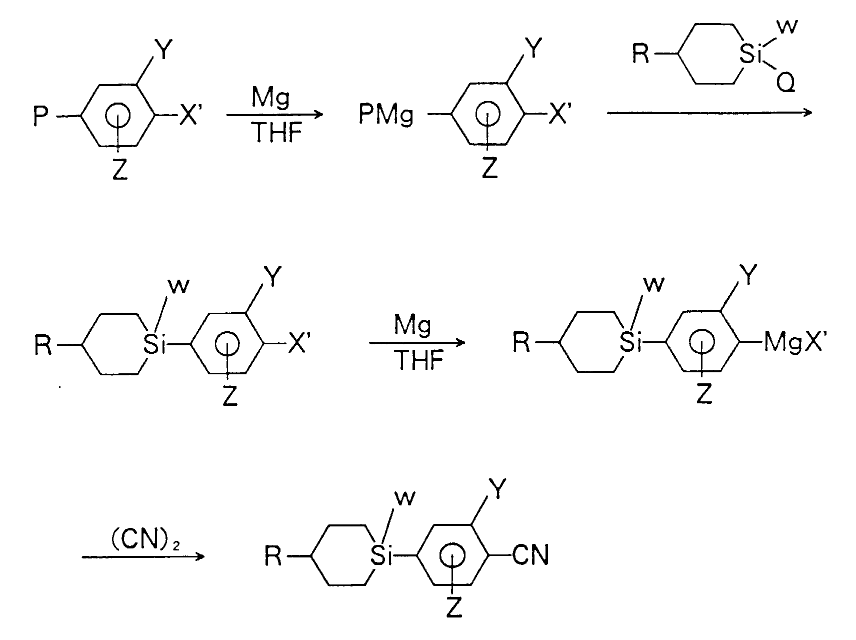 (P: Br or I; X': Halogen; Q: Halogen, alkoxy group)
(2) A method of preparing the compound of this invention other than (1) as described above
   Although the reaction substrates are somewhat different depending on the ring structure, all of them are prepared using the organometallic coupling reactions shown below.

In this preparation method, the organometallic reagent is prepared from the corresponding R-halide or the aryl halide in a solvent such as THF (tetrahydrofuran) in a conventional manner. The organometallic reagent thus prepared is then brought into reaction with a silacyclohexane compound whose silicon has the substitutional groups W and Q. The compound produced here is a mixture of trans and cis isomers in terms of the conformation of the silacyclohexane ring. A conventional purification means such as chromatography and recrystallization is employed to separate and purify the trans isomer to obtain the silacyclohexane compound of this invention represented by the general formula (I). The reaction formula is shown below. 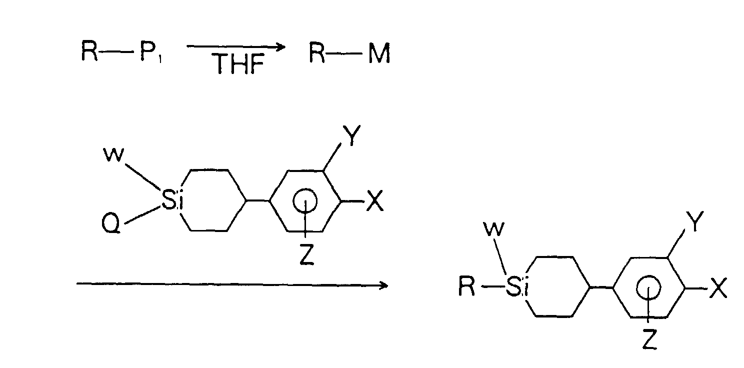 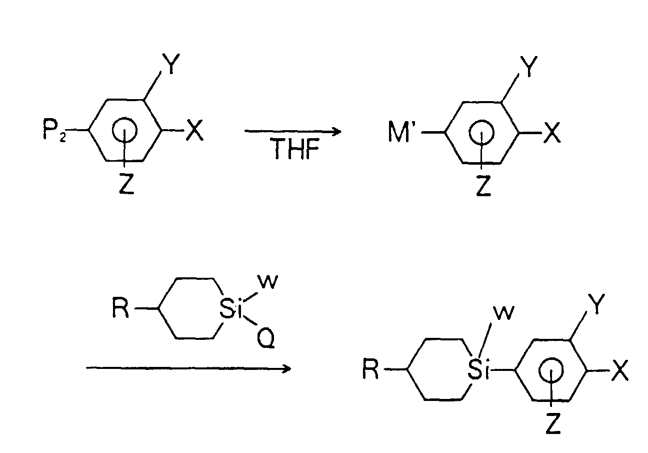 {M denotes MgP₁, ZnP₁ or Li, P₁ denotes a halogen, M' denotes MgP₂, ZnP₂ or Li, and P₂ denotes Br or I (when X is Cl), or Cl, Br or I (when X is not Cl). Q denotes a halogen or alkoxy group. W denotes a H, F, Cl or CH₃ group. X denotes a CN, F, Cl, CF₃, CF₂Cl, CHFCl, OCF₃, OCHF₂, OCF₂Cl, OCHFCl, R or OR group. Y denotes H or F. Z denotes H or F. If W = F or Cl, then W = Q.}

The silacyclohexane compound of this invention can be mixed with known compounds to obtain a liquid crystal composition. The compound used for mixing to obtain the liquid crystals compound can be chosen from among the known compounds shown below: 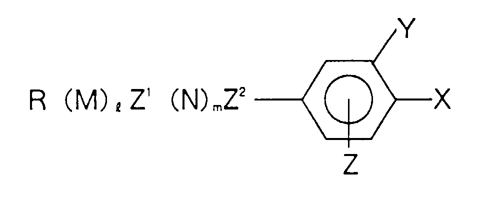 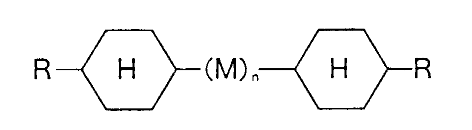 In the above foumulas, (M) and (N) denote one of the following:
1) A trans-1,4-cyclohexylene group which has no substitution or which has one or more substitutional groups such as F, Cl, Br, CN or alkyl groups,
2) A ring comprising a cyclohexane ring in which 0 or S is substituted for one or nonadjacent two CH₂ groups,
3) A 1,4-cyclohexenylene group,
4) A 1,4-phenylene group which has no substitution or which has one or two substitutional groups such as F, Cl, CH₃ or CN groups, or
5) A ring comprising a 1,4-phenylene group in which an N atom is substituted for one or two CH groups.
   Z¹ and Z² denote -CH₂CH₂-, -CH=CH-, -C≡C-, -CO₂-, -OCO -, -CH₂O-, -OCH₂- or a single bond.
   ℓ, m = 0, 1 or 2 (where ℓ + m = 1, 2 or 3, and n = 0, 1 or 2)
   R denotes hydrogen, a linear-chain alkyl group with a carbon number of 1-10, a branched-chain alkyl group with a carbon number of 3-8, an alkoxyalkyl group with a carbon number of 2-7, or an alkenyl group with a carbon number of 2-8.
   X, Y and Z are the same as defined for the general formula (I).

In the above description, if ℓ or n = 2, then (M) can contain heterogeneous rings, and if m = 2, then (N) can contain heterogeneous rings.

The ratio of one or more types of the silacyclohexane compound of this invention contained in the liquid crystal composition is 1-50 wt%, more preferably 5-30 wt%. The liquid crystal composition can also contain a polygenetic dye(s) to generate the colored guest-host system and additives to change the dielectric anisotropy, viscosity and the orientation of the nematic phase.

The liquid crystal composition thus formed can be used to manufacture various liquid crystal display elements in conventional methods. That is, the liquid crystal composition containing the silacyclohexane compound of this invention is sealed between transparent plates which have electrodes of desired shapes and thus used as liquid crystal display elements. This element can have various undercoatings, overcoatings for the orientation control, a polarizer plate(s), a filter(s) and a reflector layer(s), as necessary. It can be made into a laminated cell or combined with other display elements. Semiconductor substrates and light sources can also be used to make various types of displays.

For the mode of the liquid crystal display element, prior-art methods in the industry of liquid crystal display elements, such as the dynamic scattering (DSM) method, the twisted nematic (TN) method, the guest-host (GH) method, the super twisted nematic (STN) method and the polymer dispersion liquid crystal (PDLC) method can be adopted.

### EXAMPLES

The details of this invention is described below by referring to specific examples.

### [Example 1]

### Preparation of 4-(trans-4-n-heptyl-4-silacyclohexyl) benzonitrile

3.6 g (20 mmol) of 1-bromo-n-heptane was dropped into a mixture of 0.5 g of magnesium (21 mmol) and 50 ml of tetrahydrofuran (THF) to obtain Grignard reagent. This solution was then added to a mixture of 2.8 g of zinc chloride and 20 ml of THF to obtain the organozinc reagent. This solution was then dropped into a 50 ml THF solution of 4.7 g (20 mmol) of 4-(4 -chloro -4-silacyclohexyl) benzonitrile to obtain 4-(4-n-heptyl -4-silacyclohexyl) benzonitrile.

The product was a mixture of trans and cis isomers. They were separated by means of chromatography to obtain 5. 5 g of the trans isomer (yield 92%).
C-N transition temperature: 16°C, N-I transition temperature: 19°C.
IR (liquid film) νₘₐₓ: 2920, 2227, 2100, 1608, 1502, 1458, 1408, 1184, 987, 893, 889 and 820 cm⁻¹.

The following compounds were obtained in the same manner as Example 1.

### [Example 2]

4-(trans-4-n-pentyl-4-silacyclohexyl) benzonitrile C-I transition temperature: 38°C, N-I transition temperature: 13°C.
IR (liquid film) νₘₐₓ: 2920, 2227, 2104, 1608, 1502, 1458, 1408, 987, 881 and 825 cm⁻¹.

### [Example 3]

4-(trans-4-n-hexyl-4-silacyclohexyl) benzonitrile C-I transition temperature: 18°C, N-I transition temperature: 10°C.
IR (liquid film) νₘₐₓ: 2920, 2227, 2100, 1608, 1502, 1458, 1407 1184, 987, 889, 879 and 817 cm⁻¹.

### [Example 4]

4-(trans-4-n-nonyl-4-silacyclohexyl) benzonitrile C-I transition temperature: 32°C, N-I transition temperature: 25°C.
IR (liquid film) νₘₐₓ: 2916, 2225, 2090, 1606, 1502, 1470, 1406, 989, 933, 889 and 812 cm-1.

### [Example 5]

### Preparation of 4-(trans-4-n-heptyl-4-silacyclohexyl) -1,2-difluorobenzene

3.0 g (20 mmol) of 1-bromo-n-heptane was dropped into a mixture of 0.5 g of magnesium (21 mmol) and 50 ml of THF to obtain Grignard reagent. This reagent was then dropped into a 50 ml THF solution of 4.9 g (20 mmol) of 4-(4-chloro -4-silacyclohexyl)-1,2-difluorobenzene to obtain 4-(4-n-heptyl -4-silacyclohexyl)-1,2-difluorobenzene. The product was a mixture of trans and cis isomers. They were separated by means of chromatography to obtain 5.3 g of the trans isomer (yield 93%).
C-I transition temperature: -17°C.
IR (liquid film) νₘₐₓ: 2920, 2102, 1517, 1431, 1407, 1284, 1213, 1114, 987, 960, 889 and 811 cm⁻¹.

The following compounds were obtained in the same manner as Example 5.

### [Example 6]

4-(trans-4-n-heptyl-4-silacyclohexyl)-1-fluorobenzene C-I transition temperature: 11°C.
IR (liquid film) νₘₐₓ: 2920, 2100, 1510, 1458, 1408, 1228, 985, 887 and 820 cm⁻¹.

### [Example 7]

4-(trans-4-n-pentyl-4-silacyclohexyl)-1-fluorobenzene C-I transition temperature: 2°C.
IR (liquid film) νₘₐₓ: 2920, 2100, 1510, 1458, 1408, 1228, 987, 887 and 825 cm⁻¹.

### [Example 8]

4-(trans-4-n-hexyl-4-silacyclohexyl)-1-fluorobenzene C-I transition temperature: 8°C.
IR (liquid film) νₘₐₓ: 2920, 2100, 1510, 1458, 1408, 1228, 1159, 987, 887 and 816 cm⁻¹.

### [Example 9]

4-(trans-4-n-pentyl-4-silacyclohexyl)-1-chlorobenzene C-I transition temperature: 9°C.
IR (liquid film) νₘₐₓ: 2920, 2110, 1495, 1465, 1415, 1095, 990, 880 and 815 cm⁻¹.

### [Example 10]

4-(trans-4-n-hexyl-4-silacyclohexyl)-1-chlorobenzene C-I transition temperature: 35°C.
IR (liquid film) νₘₐₓ: 2920, 2100, 1495, 1460, 1410, 1180, 1095, 985, 880 and 805 cm⁻¹.

### [Example 11]

4-(trans-4-n-heptyl-4-silacyclohexyl)-1-chlorobenzene C-I transition temperature: 23°C.
GC-MS (70 eV) (m/z)+: 127, 154, 209, 252, 280 and 308.

### [Example 12]

4-(trans-4-n-octyl-4-silacyclohexyl)-1-chlorobenzene C-I transition temperature: 43°C.
IR (KBr) νₘₐₓ: 2920, 2100, 1495, 1460, 1410, 1090, 985, 880 and 805 cm⁻¹.

### [Example 13]

4-(trans-4-n-nonyl-4-silacyclohexyl)-1-chlorobenzene C-I transition temperature: 41°C.
IR (liquid film) νₘₐₓ: 2925, 2100, 1495, 1460, 1410, 1095, 990, 880 and 815 cm⁻¹.

### [Example 14]

4-(trans-4-n-heptyl-4-silacyclohexyl)-1-trifluoromethoxybenzene

### [Example 15]

4-(trans-4-isopentyl-4-silacyclohexyl)-1-methoxybenzene

### [Example 16]

4-(trans-4-methoxypentyl-4-fluoro-4-silacyclohexyl)-1-chloro-2-fluorobenzene

### [Example 17]

4-(trans-4-methoxypentyl-4-methyl-4-silacyclohexyl)-1,2,6-trifluorobenzene

### [Example 18]

4-(trans-4-(3-pentenyl)-4-methyl-4-silacyclohexyl)-1 -trifluoromethoxy-2-fluorobenzene

### [Example 19]

4-(trans-4-(3-methoxypropyl)-4-silacyclohexyl)-1-fluorobenzene C-I transition temperature: 5.9°C
IR (liquid film) νₘₐₓ: 2922, 2852, 2100, 1604, 1508, 1225, 1117, 887 and 818 cm⁻¹.

### [Example 20]

4-(trans-4-(E-3-hexenyl)-4-silacyclohexyl)-1-fluorobenzene C-I transition temperature: -90°C
IR (liquid film) νₘₐₓ: 2962, 2916, 2102, 1604, 1510, 1228, 1159, 985, 966, 887 and 818 cm⁻¹.

### [Example 21]

4-(trans-4-(3-methylbutyl)-4-silacyclohexyl)-1-fluorobenzene C-I transition temperature: 5.7°C
IR (liquid film) νₘₐₓ: 2954, 2916, 2100, 1606, 1510, 1228, 1159, 987, 889 and 812 cm⁻¹.

### [Example 22]

4-(trans-4-n-pentyl-1-silacyclohexyl)-2,3-difluoro-1 -ethoxybenzene

### [Example 23]

### Preparation of 4-(trans-4-n-pentyl-1-silacyclohexyl) benzonitrile

A 5 ml THF solution of 3.8 g (20 mmol) of 4-bromochlorobenzene was dropped into a mixture of 0.5 g of magnesium (21 mmol) and 50 ml of THF to obtain Grignard reagent. This reagent was then dropped into a 50 ml THF solution of 4.1 g (20 mmol) of 4-n-pentyl-1-chloro-l-silacyclohexane to obtain 5.5 g (yield 97%) of 4-(4-n-pentyl-1-silacyclohexyl) chlorobenzene.

The obtained 4-(4-n-pentyl-1-silacyclohexyl) chlorobenzene was then added to a mixture of 0.5 g of magnesium (21 mmol) and 50 ml of THF to obtain Grignard reagent. This was added to an ether solution of 1.6 g of cyanogen (CN)₂ to obtain 4 -(4-n-pentyl-4-silacyclohexyl) benzonitrile. The product was a mixture of trans and cis isomers. They were separated by means of chromatography to obtain 4.5 g of the trans isomer (yield 90%).
¹H-NMR (100 MHz, CDCl₃) δ :
0.30 (s, 3H),
0.75-1.00 (m, 7H),
1.10-1.40 (m, 10H),
1.60-2.10 (m, 3H),
7.60 (s, 4H) ppm
IR (liquid film) νₘₐₓ: 2924, 2229, 1385, 1252, 1101, 985, 810 and 775 cm⁻¹.

### [Example 24]

4-(trans-4-n-propyl-1-methyl-1-silacyclohexyl) benzonitrile C-I transition temperature: 36°C.
IR (liquid film) νₘₐₓ: 2910, 2229, 1385, 1252, 1101, 972, 812 and 775 cm⁻¹.

### [Example 25]

4-(trans-4-n-butyl-1-methyl-1-silacyclohexyl) benzonitrile C-I transition temperature: 25°C.
IR (liquid film) νₘₐₓ: 2922, 2229, 1385, 1252, 1101, 980, 810 and 768 cm⁻¹.

### [Example 26]

### Preparation of 4-(trans-4-isopentyl-1-silacyclohexyl) -1-trifluoromethylbenzene

4.5 g (20 mmol) of 4-bromo-1-trifluoromethylbenzene was dropped into a mixture of 0.5 g of magnesium (21 mmol) and 50 ml of THF to obtain Grignard reagent. This solution was then dropped into a 50 ml THF solution of 4.1 g (20 mmol) of 4-isopentyl-1-chloro-1-silacyclohexane to obtain 4-(4-isopentyl -1-silacyclohexyl)-1-trifluoromethylbenzene. The product was a mixture of trans and cis isomers. They were separated by means of chromatography to obtain 5.8 g of the trans isomer (yield 92%).

The following compound was obtained in the same manner as Example 26.

### [Example 27]

4-(trans-4-methoxypentyl-1-silacyclohexyl)-1-difluoromethoxybenzene

The compounds of this invention obtained in the examples described above were added to existing liquid crystal compositions to prepare liquid crystal compositions of this invention. For the obtained liquid crystal compositions, the threshold voltage and the viscosity at -20°C were measured.

### [Example of the liquid crystal composition]

A mixture A which comprises 40 mole% of 4-(4-(trans-4-ethylcyclohexyl)-trans-4-cyclohexyl)-1,2-difluorobenzene, 35 mole% of 4-(4-(trans-4-n-propylcyclohexyl)-trans-4-cyclohexyl) -1,2-difluorobenzene and 25 mole% of 4-(4-(trans-4-n-pentylcyclohexyl) -trans-4-cyclohexyl)-1,2-difluorobenzene shows characteristics listed below.
C-N transition temperature: 7°C
N-I transition temperature: 106°C
Threshold voltage: 2.50V
Viscosity (20°C): 26 cp

A mixture which comprises 85% of this mixture A and 15 mole% of 4-(trans-4-n-hexyl-4-silacyclohexyl)-1-fluorobenzene obtained in Example 8 shows characteristics listed below.
C-N transition temperature: 2°C
N-I transition temperature: 81°C
Threshold voltage: 2.30V
Viscosity (20°C): 19.7 cp

The silacyclohexane compounds of this invention have a tendency to show an enantiotropic phase transition when their substitutional group X is CN. When the substitutional group X is not CN, most of them show a monotropic phase transition or a crystal-isotropic liquid type transition, and do not show the electro-optical characteristics of liquid crystals when used alone. However, they contribute to a reduction in the viscosity and a lowering of the melting point when used with other liquid crystal compounds in a liquid crystal composition.

By using the liquid crystal compounds of this invention which have Si as a ring composing element as components of a liquid crystal composition, reduction of the viscosity, improvement of the response time and improvement of mutual solubility at low temperatures can be achieved.

Also, liquid crystal compounds whose X in the general formula (I) is neither R nor OR have, in addition to the advantages mentioned above, an effect of lowering the threshold voltage because of a greater dielectric anisotropy.

The liquid crystal compound whose substitutional group X in the general formula (I) is R or OR has near-zero dielectric anisotropy, and therefore it should preferably be used for the liquid crystal phase for display based on the dynamic scattering (DS) or deformation of aligned phase (DAP mode). The compounds in which X is other than R or OR should preferably be used for manufacturing the liquid crystal phase with a large positive dielectric anisotropy which is used in display elements based on the twisted nematic cell or the cholesteric-nematic phase transition.

## Claims

1. A silacyclohexane compound represented by the following general formula (I) 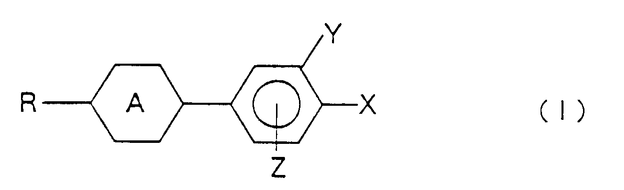 wherein R denotes a linear-chain alkyl group with a carbon number of 1-10, a branched-chain alkyl group with a carbon number of 3-8, an alkoxyalkyl group with a carbon number of 2-7, or an alkenyl group with a carbon number of 2-8, 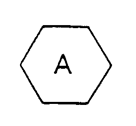 is a trans-1-silacyclohexylene or trans-4-silacyclohexylene group whose silicon at position 1 or position 4 has a substitutional group(s) of H, F, Cl or CH₃, X denotes a CN, F, Cl, CF₃, CF₂, Cl, CHFCl, OCF₃, OCHF₂, OCF₂Cl, OCHFCl, R or OR group, Y denotes H or F, and Z denotes H or F, except trans-4-(1-methyl-4-tert-butyl-1-silacyclohexyl)-chlorobenzene

2. A method of preparing the silacyclohexane compound as described in claim 1 characterized by the use of a reaction between an organometallic reagent R-M (M denotes MgP, ZnP or Li. P denotes a halogen group and R has the meaning as defined in claim 1) and a silacyclohexane compound 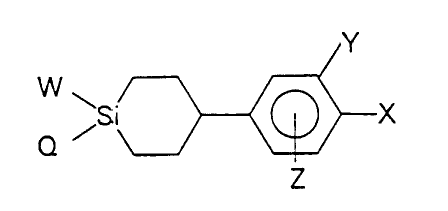 (wherein W denotes a H, F, Cl or CH₃ group, Q denotes a halogen or alkoxy group, and X, Y and Z are as defined in claim 1).

3. A method of preparing the silacyclohexane compound as described in claim 1 characterized by the use of a reaction between an organometallic reagent 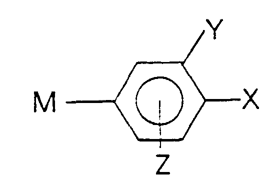 (wherein M is as defined in claim 2, and X, Y and Z are as defined in claim 1) and a silacyclohexane compound 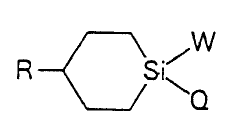 (wherein R is as defined in claim 1, and W and Q are as defined in claim 2)

4. A method of preparing the silacyclohexane compound as described in claim 1 characterized by the use of a reaction between a cyanation reagent and Grignard reagent made from a phenylsilacyclohexane compound 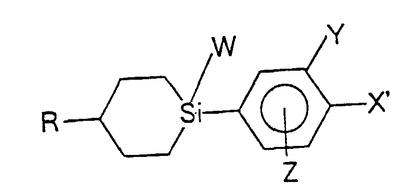 (wherein X' denotes a halogen, R, Y and Z are as defined in claim 1, and W is as defined in claim 2) which is obtained by a reaction between an organometallic reagent 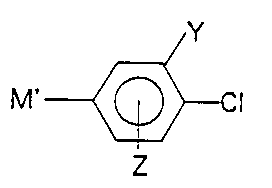 (wherein M' denotes MgP', ZnP' or Li, and P' denotes Br or I.) and a silicyclohexane compound 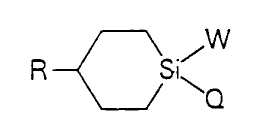 (wherein Q is as defined in claim 2).

5. A liquid crystal composition characterized by containing the compound as described in claim 1.

6. A liquid crystal display element characterized by containing the liquid crystal composition as described in claim 5.

## Patentansprüche

1. Silacyclohexanverbindungen der folgenden allgemeinen Formel (I) 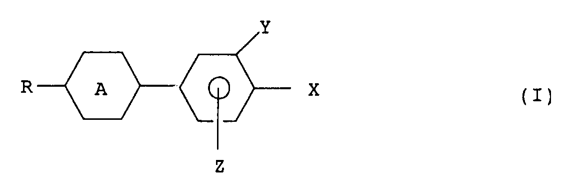 worin R eine linearkettige Alkylgruppe mit einer Kohlenstoffanzahl von 1-10, eine verzweigtkettige Alkylgruppe mit einer Kohlenstoffanzahl von 3-8, eine Alkoxyalkylgruppe mit einer Kohlenstoffanzahl von 2-7 oder eine Alkenylgruppe mit einer Kohlenstoffanzahl von 2-8 bedeutet, 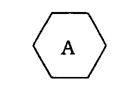 eine trans-1-Silacyclohexylen- oder trans-4-Silacyclohexylengruppe ist, deren Silicium an Position 1 oder Position 4 eine Substituentengruppe(n) aus H, F, Cl oder CH₃ aufweist, X CN, F, Cl, CF₃, CF₂, Cl, CHFCl, OCF₃. OCHF₂, OCF₂Cl, OCHFCl, R oder OR-Gruppe bedeutet, Y H oder F bedeutet, und Z H oder F bedeutet, ausgenommen trans-4-(1-Methyl-4-tert-butyl-1-silacyclohexyl)-chlorbenzol.

2. Verfahren zur Herstellung der Silacyclohexanverbindung nach Anspruch 1, gekennzeichnet durch die Anwendung einer Umsetzung zwischen einem organometallischen Reagens R-M (M bedeutet MgP, ZnP oder Li, P bedeutet eine Halogengruppe und R hat die in Anspruch 1 angegebene Bedeutung) und einer Silacyclohexanverbindung 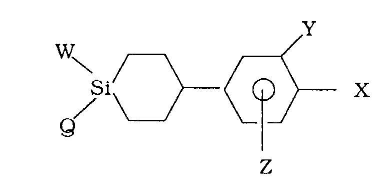 (worin W H, F, Cl oder CH₃-Gruppe bedeutet, Q ein Halogen oder eine Alkoxygruppe bedeutet, und X, Y und Z wie in Anspruch 1 definiert sind).

3. Verfahren zur Herstellung der Silacyclohexanverbindung nach Anspruch 1, gekennzeichnet durch die Anwendung einer Umsetzung zwischen einem organometallischem Reagens 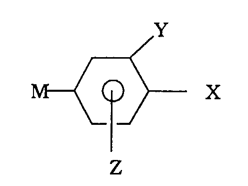 (worin M wie in Anspruch 2 definiert ist, und X, Y und Z wie in Anspruch 1 definiert sind) und einer Silacyclohexanverbindung 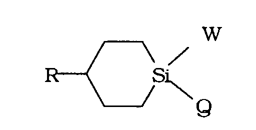 (worin R wie in Anspruch 1 definiert ist, und W und Q wie in Anspruch 2 definiert sind).

4. Verfahren zur Herstellung der Silacyclohexanverbindung nach Anspruch 1, gekennzeichnet durch die Anwendung einer Umsetzung zwischen einem Cyanierungsreagens und einem Grignard-Reagens, hergestellt aus einer Phenylsilacyclohexanverbindung 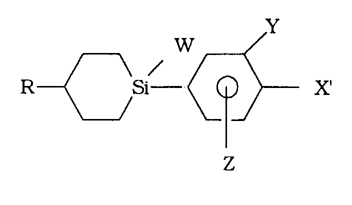 (worin X' ein Halogen bedeutet, R, Y und Z wie in Anspruch 1 definiert sind, und W wie in Anspruch 2 definiert ist), welche erhalten wird durch eine Umsetzung zwischen einem organometallischem Reagens 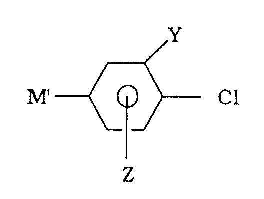 (worin M' MgP', ZnP' oder Li bedeutet und P' Br oder I bedeutet) und einer Silicyclohexanverbindung 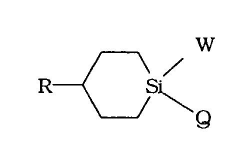 (worin Q wie in Anspruch 2 definiert ist).

5. Flüssigkristallzusammensetzung, dadurch gekennzeichnet, daß sie die Verbindung gemäß Anspruch 1 enthält.

6. Flüssigkristallanzeigeelement, dadurch gekennzeichnet, daß es die Flüssigkristallzusammensetzung gemäß Anspruch 5 enthält.

## Revendications

1. Composé silacyclohexane représenté par la formule générale (I) suivante 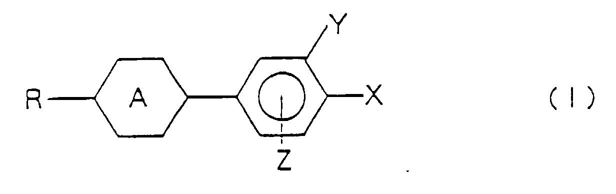 dans laquelle R représente un groupe alkyle à chaîne linéaire comportant un nombre d'atomes de carbone de 1 à 10, un groupe alkyle à chaîne ramifiée comportant un nombre d'atomes de carbone de 3 à 8, un groupe alcoxyalkyle comportant un nombre d'atomes de carbone de 2 à 7 ou un groupe alcényle comportant un nombre d'atomes de carbone de 2 à 8, 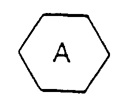 est un groupe trans-1-silacyclohexylène ou un groupe trans-4-silacyclohexylène dont l'atome de silicium en position 1 ou en position 4 possède un ou des groupes de substitution de H, F, Cl ou CH₃, X représente un groupe CN, F, Cl, CF₃, CF₂Cl, CHFCl, OCF₃, OCHF₂, OCF₂Cl, OCHFCl, R ou OR, Y représente H ou F et Z représente H ou F, à l'exception du trans-4-(1-méthyl-4-tert-butyl-1-silacyclohexyl)chlorobenzène.

2. Procédé de préparation du composé silacyclohexane tel que défini dans la revendication 1, caractérisé en ce qu'on utilise une réaction entre un réactif organométallique R-M (M désigne MgP, ZnP ou Li, P représente un groupe halogéno et R a la signification donnée dans la revendication 1) et un composé silacyclohexane 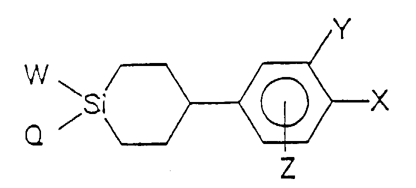 (dans lequel W représente H, F, Cl ou CH₃, Q représente un groupe halogéno ou alcoxy et X, Y et Z sont tels que définis dans la revendication 1).

3. Procédé de préparation du composé silacyclohexane tel que défini dans la revendication 1, caractérisé en ce qu'on utilise une réaction entre un réactif organométallique 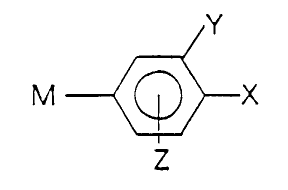 (dans lequel M est tel que défini dans la revendication 2 et X, Y et Z sont tels que définis dans la revendication 1)
et un composé silacyclohexane 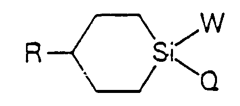 (dans lequel R est tel que défini dans la revendication 1 et W et Q sont tels que définis dans la revendication 2).

4. Procédé de préparation du composé silacyclohexane tel que défini dans la revendication 1, caractérisé en ce qu'on utilise une réaction entre un réactif de cyanation et un réactif de Grignard préparé à partir d'un composé phénylsilacyclohexane 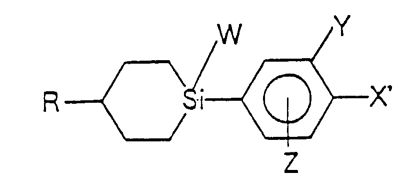 (dans lequel X' représente un atome d'halogène, R, Y et Z sont tels que définis dans la revendication 1 et W est tel que défini dans la revendication 2) que l'on obtient par une réaction entre un réactif organométallique 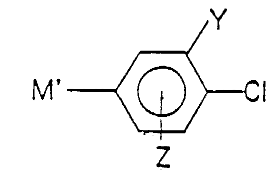 (dans lequel M' représente MgP', ZnP' ou Li et P' représente Br ou I) et un composé silicyclohexane 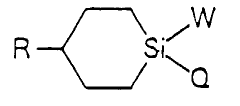 (dans lequel Q est tel que défini dans la revendication 2).

5. Composition à cristaux liquides caractérisée en ce qu'elle contient le composé tel que défini dans la revendication 1.

6. Elément d'affichage à cristaux liquides caractérisé en ce qu'il contient la composition à cristaux liquides telle que définie dans la revendication 5.
